# EUROPÄISCHE PATENTSCHRIFT

(11) **EP 2 132 103 B1**
(45) Veröffentlichungstag und Bekanntmachung des Hinweises auf die Patenterteilung: **14.12.2011**
(21) Anmeldenummer: 08715815.0
(22) Anmeldetag: 16.02.2008
(51) Int. Cl.: B65D 30/18, B65D 30/24, B65D 75/68

(54) **PAPIERVENTILSACK MIT INNENRIEGEL**
PAPER VALVE SACK WITH INNER LINING
SAC À VALVE EN PAPIER DOTÉ D'UNE BANDE DE FERMETURE

(30) Priorität: 29.03.2007 DE 102007015099
(43) Veröffentlichungstag der Anmeldung: 16.12.2009
(73) Patentinhaber: Construction Research & Technology GmbH, 83308 Trostberg (DE)
(72) Erfinder: WIEDERMANN, Markus, 86456 Gablingen (DE); BAUMEISTER, Florian, 86459 Gessertshausen (DE); SCHMID, Werner, 86517 Wehringen (DE); HUBER, Manfred, 86179 Augsburg (DE); WÖRNHÖR, Edith, 86152 Augsburg (DE)
(74) Vertreter: Bieller, Vera
(86) Internationale Anmeldenummer: PCT/EP2008/001215
(87) Internationale Veröffentlichungsnummer: WO 2008/119414

(56) Entgegenhaltungen:
- EP-A- 1 033 311
- DE-A1- 1 486 379
- DE-A1- 3 236 770
- DE-A1- 4 010 822
- DE-A1- 19 522 619
- FR-A- 1 572 016

## Beschreibung

Gegenstand der vorliegenden Erfindung ist ein spezieller Papierventilsack mit Innenriegel.

Papiersäcke und insbesondere Papierventilsäcke sind allgemein bestens bekannt und werden für die Aufnahme, den Transport und die Lagerung von Schüttgütern allgemein, wie z. B. Zement, Gips, Tierfutter oder Tierstreu, vor allem aber auch für feinkörniges oder pulverförmiges Füllgut, eingesetzt. Übliche Größen derartiger Säcke verfügen über ein Volumen von 5, 10 aber auch 25 kg. Typische Papierventilsäcke bestehen üblicherweise aus einem im Wesentlichen rechteckigen Boden, einem dem Boden gegenüberliegenden und im Wesentlichen ebenfalls rechteckigen Oberteil, einem schlauchförmigen Papiersackkörper, der sich zwischen dem Boden und dem Oberteil erstreckt und ggf. einem Deckblattauftrag. Dieses Deckblatt ist auf der Außenseite des Oberteils aufgetragen und kann ggf. mit einem Tragegriff versehen oder als solcher ausgebildet sein.

Typisch für Papierventilsäcke ist ein in dem gefalteten Boden befestigtes schlauchförmiges Ventil. Papierventilsäcke werden üblicherweise mit einem gefalteten Boden in Form eines Kreuz- oder Blockbodens ausgestattet, wobei spezielle Bodenklappen über einen Eckeinschlag greifen. Das angesprochene schlauchförmige Ventil wird in einem Zwischenraum befestigt, der aus dem Eckeinschlag und den Bodenklappen gebildet wird. Das Ventil selbst besteht aus einem Trägermaterial, welches in Bodenlängsrichtung gefaltet ist, und verfügt über eine Ober- und eine Unterseite, die über Längsfaltlinien miteinander verbunden sind.

In seinem geschlossenen Zustand liegt das Ventil konstruktionsbedingt flach im Boden bis es im Rahmen der Befüllung des Papiersackes von der Sackaußenseite her meist durch ein Füllrohr aufgespreizt wird und auf diese Weise die Befüllung des Sackinneren ermöglicht. Das Ventil wird verschlossen, indem das Füllmaterial des Sackes gegen dessen Boden drückt und dadurch die Ventilunterseite gegen die Ventiloberseite presst. Konstruktionsbedingt können gewisse Verluste des Füllmaterials durch Ausrieseln oder Ausstauben nicht vermieden werden, weshalb man versucht hat, das Trägermaterial des Ventils mit einer verschweißbaren Schicht zu versehen und zusätzlich die Ventiloberseite mit der Ventilunterseite zu verschweißen. Nach dem Aufbringen dieser zusätzlichen Schicht kann das Ventil dann mit Heißluft, aber auch Ultraschallanlagen verschlossen werden.

Aus deren bereits beschriebenen Konstruktionsmerkmalen ergeben sich bei Papierventilsäcken mit Block- oder Kreuzböden, die aus Papier gefertigt sind, insofern Nachteile, als die Laschen auf der Innenseite des Sackbodens oder auch des Oberteils unerwünschte Hohlräume wie Ritzen oder Taschen bilden, in denen sich vor allem feinteilige pulverförmige Füllmaterialien, aber auch körnige oder pastöse Reste des Sackinhaltes festsetzen können. Es werden deshalb in den Boden oder das Oberteil des Papierventilsackes innenseitig sog. Innenriegel eingeklebt, die üblicherweise durch ein rechteckiges Blatt gebildet werden, die aus dem selben Material gefertigt sind, wie auch der Papierventilsack selbst. Die Innenriegel sind umlaufend mit den Laschen verklebt oder verschweißt, wodurch die Hohlräume gegenüber dem Inneren des Sackes verschlossen werden.

Aus der WO 95/02544 A1 ist ein Verfahren zur Herstellung von speziellen Beuteln bekannt, bei denen das Beutelmaterial sowie der Innenriegel aus innenseitig mit Polyethylen-beschichtetem Papier bestehen. Der Innenriegel wird bei diesem Verfahren an den Rändern, die parallel zu den schmalseitigen Rändern des Bodens verlaufen, mit den zugehörigen Bodenlaschen verklebt und parallel zu den breitseitigen Rändern des Bodens werden die einander zugewandten beschichteten Flächen des Innenriegels und der Bodenlaschen durch durchgehende Schweißlinien miteinander verbunden.

Die DE 20 2004 015 551 U1 beschreibt einen Papiersack mit Folienüberlappung für feinkörniges Schüttgut. Dieser Papiersack verfügt über einen Boden, ein Oberteil und einen schlauchförmigen Papiersackkörper. Diese Formgebung ermöglicht einen kostengünstigen Transport und der Sackkörper lässt sich außerdem gut bedrucken. Weiterhin ist es aus dem einschlägigen Stand der Technik bekannt, auf den Außenbereich der Oberseite eines Papiersackes einen Deckblattauftrag aufzubringen, der ebenfalls gut bedruckt werden kann und so zum Zweck der Produkt- und Herstellerinformation, aber auch zu Werbezwecken geeignet ist. Bekannt ist außerdem, das Deckblatt mit einem Tragegriff zu kombinieren, was insbesondere dadurch geschehen kann, dass aus einem Deckblattauftrag zwei parallele Schnitte ausgestanzt werden, so dass der Anwender aus dem verschweißten Deckblatt einen Tragegriff für den Papiersack bilden kann.

Es wurde bereits mehrfach darauf hingewiesen, dass Papierventilsäcke konstruktionsbedingt immer etwas von der Füllmenge durch Ausrieseln oder Ausstauben verlieren. Nachteilig ist auch, dass Papierventilsäcke gegenüber Feuchtigkeitseinflüssen empfindlich sind, was sich insgesamt nachteilig auf das Füllgut auswirken kann. Durch zahlreiche Variationen und zusätzliche Ausstattungsmerkmale hat man deshalb versucht, die Ausgestaltung von Papierventilsäcken weiter zu optimieren. Insbesondere standen dabei der Schutz des Füllgutes vor Feuchtigkeit sowie die Problematik der Befüllung bei der Gestaltung der Papiersäcke im Vordergrund.

Aus DE 10 2004 043 446 A1 ist bspw. ein Papierventilsack mit einer speziellen Ventilausführung bekannt. DE 20 2005 003 539 U1 beschreibt einen leicht befüllbaren Papierventilsack mit verbesserter Wasserdampfdichte.

Da in letzter Zeit bei der Gestaltung von Papierventilsäcken für insbesondere feinkörniges und pulverförmiges Füllgut auch der Handlingkomfort für den Anwender des Füllgutes immer wichtiger wird, wurden auch hierzu bereits mehrere Lösungsansätze vorgeschlagen. Der mit dem Deckblatt kombinierte und darin eingestanzte Tragegriff (s.o.) ist bspw. in DE 20 2006 006 436 U1 beschrieben. Das flächig verklebte Deckblatt dient in diesem Fall der Versiegelung des Faltbereiches des Papierventilsackendes und außerdem zur Aufnahme aufgedruckter Informationen und als Tragegriff.

Weiter ist aus dem Stand der Technik eine Papierventilsackvariante bekannt, die ein sog. Peeldeckblatt aufweist. Im Gegensatz zum Bodendeckblatt, aber auch zu einem Deckblatt, dass sich auf der Außenseite des Oberteils befindet und die flächig verklebt sind, wird das Peeldeckblatt nur partiell verklebt, was über Punkt- oder Randverklebungen erfolgen kann. Auf diese Weise wird ein Öffnen des Papierventilsackes ohne ein Werkzeug ermöglicht, so dass das Peeldeckblatt einfach manuell abgezogen werden kann. Bei herkömmlichen Papierventilsäcken mit flächig verklebtem Deckblatt muss der Sack zum Entnehmen oder Entleeren des Füllgutes mit einem Werkzeug, wie z. B. einem Messer, einer Schere oder einer Kelle, geöffnet werden, wobei nicht gänzlich ausgeschlossen werden kann, dass es in Abhängigkeit vom jeweiligen Füllgut zu einer unerwünschten Staubentwicklung kommt. Außerdem kann nicht vollständig vermieden werden, dass durch das Durchtrennen und Aufreißen der Papierfolie Folienbestandteile und Papierteile auf unerwünschte Weise in das Füllgut gelangen und dieses verunreinigen. Die unbestreitbaren Vorteile eines Papierventilsackes mit Peeldeckblatt sind darin zu sehen, dass zur Öffnung kein Werkzeug benötigt wird, wodurch eine leichtere Handhabung ermöglicht wird, und dass außerdem kein Verpackungsmaterial beim Öffnen ins Füllgut gelangen kann.

Nachteilig bei dieser Gestaltung eines Papierventilsackes mit einem Peeldeckblatt ist jedoch, dass ein befriedigender Verschluss des Sackes nicht erreicht werden kann. Die in diesem Bereich benötigte sehr dezente Leimverklebung der Papiereinschläge stellt nämlich eine deutliche Schwachstelle dar: Die beim Transport der gefüllten Papierventilsäcke auftretenden Vibrationen führen unvermeidlich zu einem Austreten von insbesondere pulverförmigem Material aus dem Sackinneren in den Faltbereich, was spätestens beim Öffnen des Sackes durch Abziehen des Peeldeckblattes unweigerlich zur Staubbildung führt. Ebenso nachteilig ist das Ausstauben des Füllgutes bei noch geschlossenem Sack, da der feinkörnige oder pulverförmige Inhalt durch die Falt- und nicht verklebten Bereiche des Peeldeckblattes bis nach außen fließen kann.

Zur Umgehung dieser Problematik des Ausstaubens und gleichzeitig zur Verbesserung des Handlings wird seit einiger Zeit ein Papierventilsack angeboten, an dessen Bodendeckblatt ein Aufreißfaden angebracht ist. Dadurch wird eine erhöhte Dichtigkeit erreicht und ein leichtes Öffnen ohne Werkzeug ermöglicht (s. www.dy-pack.de; Produkt: Ripit^{™}). Derartige Säcke werden vor allem für Tierfutter oder Katzenstreu eingesetzt. Das Ausstauben des Füllgutes, vor allem unter Transportbedingungen, kann jedoch auch in diesem Fall nicht vollständig verhindert werden.

Papierventilsäcke, die das Ausstauben des Füllgutes vollständig unterdrücken, sind aus dem Stand der Technik ebenfalls bekannt. Herkömmliche Papierventilsäcke, die ggf. über ein Boden- oder Peeldeckblatt verfügen, werden mit Hilfe eines sog. Innenriegels, wie er oben bereits näher beschrieben worden ist, zusätzlich verschlossen. Der Innenriegel dient dazu, den Faltbereich bzw. die Papiereinschläge so abzudichten, dass ein Ausstauben des Füllmaterials zuverlässig verhindert wird. In DE 195 22 619 A1 wird ein Verfahren zur Herstellung von Bodenbeuteln mit einem eingeklebten Innenriegel beschrieben. Derartige Beutel- oder Sackausführungen besitzen aber den Nachteil, dass zur Öffnung wiederum Werkzeuge notwendig sind, mit denen weitere bereits beschriebene Nachteile einhergehen. In DE 4010 822 A1 wird ein weiterer Papierventilsack mit einem Innenriegel und einer Öffnungshilfe beschrieben. Letzlich beschreibt EP 1 033 311 A2 einen Papierventilsack gemäß dem Oberbegriff des Anspruchs 1.

Ausgehend von dem geschilderten Stand der Technik hat sich für die vorliegende Erfindung die Aufgabe gestellt, einen Papierventilsack mit Innenriegel (1) bereitzustellen, wobei sich der Innenriegel an dem dem Papiersackende mit Ventil (2) gegenüberliegenden Papiersackende (3) befindet. Dieser neue Papierventilsacktyp soll das Ausstauben von insbesondere feinkörnigem oder pulverförmigem Füllgut oder solchermaßen feinteiligen Füllgutanteilen beim Transport und/oder bei der Verwendung des Füllgutes verhindern und außerdem das Öffnen und den Zugang zum Füllgut ohne die Zuhilfenahme eines Werkzeuges bequem ermöglichen.

Gelöst wurde diese Aufgabe dadurch, dass der Innenriegel (1) an seiner dem Sackinneren zugewandten Fläche eine Öffnungshilfe (4) mit einem höheren Elastizitätsmodul und/oder einer höheren Zugfestigkeit als der Innenriegel (1) aufweist.

Die gestellte Aufgabe wurde insofern vollständig gelöst, als es die Öffnungshilfe (4) ermöglicht, den Innenriegel ggf. nach Abziehen des Deckblattes oder des Peeldeckblattes ohne Verwendung von Werkzeug zuverlässig und bequem zu öffnen. Außerdem kann auf die Vorteile eines Innenriegels weiterhin zurückgegriffen und so das Ausstauben vollständig unterdrückt werden. Aufgrund der Erfahrungen mit den zahlreichen bekannten Papierventilsackvarianten war das problemlose Erreichen der Zielstellung so nicht zu erwarten. Außerdem hat sich der höhere Elastizitätsmodul der Öffnungshilfe (4) insofern als günstig erwiesen, als nun mit der erfindungswesentlichen Öffnungshilfe die Papierventilsäcke insgesamt besser gehandhabt werden können. Die Öffnungshilfen (4) können nämlich so ausgestaltet werden, dass sie gut gegriffen werden können und somit den manuellen Transport der gefüllten Papierventilsäcke erleichtern.

Ein erfindungswesentliches Merkmal des erfindungsgemäßen Papierventilsackes besteht in dem höheren Elastizitätsmodul und/oder der höheren Zugfestigkeit der Öffnungshilfe (4) gegenüber dem Innenriegel (1), an dem die öffnungshilfe (4) befestigt ist: Unter dem Elastizitätsmodul wird üblicherweise diejenige Zugspannung verspannen, bei welcher sich ein Zugstab aus dem zu untersuchenden Material in der Länge verdoppelt. Bei dieser Verdoppelung handelt es sich allerdings um einen Idealzustand, der bei keinem Material in der Realität auftritt. Der Elastizitätsmodul wird in Mega-Pascal (MPa) angegeben und er hängt von verschiedenen Umgebungsbedingungen, wie z. B. Temperatur, Feuchte oder der Verformungsgeschwindigkeit, ab. Elastizitätsmoduln werden in der Regel bei 20 °C gemessen und für diesen Temperaturbereich, also für Raumtemperatur, angegeben. Ein weiteres Kriterium kann die Zugfestigkeit der Öffnungshilfe (4) gegenüber dem Innenriegel (1) sein, wobei der Parameter Zugfestigkeit (Rₘ) des zu untersuchenden Materials keinerlei Bezug zum Elastizitätsmodul hat. Beide Parameter, also der Elastizitätsmodul, aber auch die Zugfestigkeit sind Bewertungskriterien für die Verformungseigenschaft eines definierten Materials, also für dessen elastisches Verhalten. Unter Zugfestigkeit wird die Spannung verstanden, die im Zugversuch aus der maximal erreichten Zugkraft, bezogen auf den ursprünglichen Querschnitt der Materialprobe errechnet wird. Wie auch beim Elastizitätsmodul ist die Einheit Mega-Pascal; als Dimension der Zugfestigkeit ist Kraft pro Fläche festgelegt.

Die Öffnungshilfe (4) weist somit erfindungsgemäß einen höheren Elastizitätsmodul und/oder eine höhere Zugfestigkeit gegenüber dem Innenriegel (1) auf. Damit ist sichergestellt, dass in jedem Fall das Innenriegelmaterial einer Zug- oder Dehnungsbeanspruchung zu einem früheren Zeitpunkt nachgibt als das Material der Öffnungshilfe. Nur so ist gewährleistet, dass die Öffnungshilfe (4) zum Aufreißen des Innenriegels (1) herangezogen werden kann.

Als besonders vorteilhaft hat sich herausgestellt, wenn die Öffnungshilfe (4) an mindestens einem Flächenende (5) und höchstens zwei sich gegenüberliegenden Flächenenden des Innenriegels (1) über die Flächenerstreckung des Innenriegels (1) hinausreicht (6). Gleichzeitig oder alternativ davon ist die Öffnungshilfe (4) parallel zur Längserstreckung der Innenriegelfläche und vorzugsweise mittig an dieser angebracht, was von der vorliegenden Erfindung ebenfalls mitumfasst ist.

Aus produktionstechnischen Gründen und auch unter Gesichtspunkten der besseren Handhabung hat es sich als vorteilhaft herausgestellt, wenn es sich bei der Öffnungshilfe (4) um ein Aufreißband oder einen Aufreißfaden handelt.

Die Öffnungshilfe (4) ist hinsichtlich ihrer Ausgestaltung, aber auch des Materials, aus dem es besteht oder hergestellt wurde, keinen weiterreichenden Einschränkungen unterworfen. Wesentlich ist nur, dass ihr Elastizitätsmodul höher ist als der des Innenriegels (1), an dem sie befestigt ist. So kann die Öffnungshilfe (4) gemäß vorliegender Erfindung aus modifizierten Naturprodukten, wie Wolle, Baumwolle oder Zellulose, bestehen; in Frage kommen aber auch sämtliche Kunststoffe, wie Polymere, die aus den Monomeren Ethylen, Styrol, Vinylacetat, Vinylchlorid, Propylen und Polyurethan aufgebaut sind. Selbstverständlich kommt auch ein Materialmix in Frage, um so die an die Öffnungshilfe (4) gestellten breiten und variierenden Anforderungen erfüllen zu können.

Auch hinsichtlich ihrer Dimensionierung kann die Öffnungshilfe (4) innerhalb eines breiten Spektrums variiert werden: In Abhängigkeit von der Größe und dem Füllvolumen sowie der Art des Füllmaterials empfiehlt es sich allerdings, die Breite oder den Durchmesser der Öffnungshilfe (4) so zu wählen, dass diese zwischen 0,1 mm und 5 mm, bevorzugt zwischen 0,2 mm und 3 mm und besonders bevorzugt zwischen 0,5 mm und 2 mm liegen.

Hinsichtlich ihrer Befestigungsart sieht die vorliegende Erfindung vor, dass die Öffnungshilfe (4) am Innenriegel (1) verklebt und/oder verschweißt ist.

Wie bereits allgemein diskutiert, weisen sog. Deckblätter oder Peeldeckblätter zusätzliche Vorteile auf, die das Einsatzspektrum von Papierventilsäcken zusätzlich erweitern. Aus diesem Grund wird von der vorliegenden Erfindung auch eine Variante des erfindungsgemäßen Papierventilsacks berücksichtigt, bei dem das den Innenriegel aufweisende Papiersackende zur Umgebung hin ein Peeldeckblatt aufweist und/oder bei der der Boden ein flächig verschweißtes oder verklebtes Deckblatt besitzt. Hinsichtlich der Dichtigkeit und der Kennzeichnung weist der erfindungsgemäße Papierventilsack somit zusätzliche und unbestrittene Vorteile auf.

Zusammenfassend kann hinsichtlich der erfindungswesentlichen Öffnungshilfe (5) festgestellt werden, dass diese in Form eines Aufreißfadens oder Aufreißbandes so am Innenriegel (1) angebracht werden kann, dass sie in voller Länge zur Längs- oder aber auch zur Querrichtung des Innenriegels verläuft und mindestens an einer Seite über die Fläche des Innenriegels (1) hinausreicht. Dabei wird der über den Innenriegel hinausreichende Teil der öffnungshilfe (4) beim Falten und Verkleben des Sackbodens bzw. Sackoberteiles so geführt, dass dieser Teil über den Innenriegelfalz hinausreicht und so von außen jederzeit offen zugänglich ist. Vorzugsweise wird die Öffnungshilfe (4) am Innenriegel (1) durch Verkleben fixiert und bezogen auf den Innenriegel (1) in Längsrichtung zu diesem angebracht. Durch manuelles aber auch maschinelles Ziehen an der Öffnungshilfe (4) wird der Innenriegel (1) vollständig mittig eingerissen, so dass der Zugang zum Füllgut ermöglicht wird und auch das Entleeren des Füllgutes ohne unnötige Staubbelastung erfolgen kann.

Der Innenriegel (1), an dem die Öffnungshilfe (4) befestigt ist, kann aus dem selben Material wie der Papierventilsack bestehen. Es kann sich dabei um bekannte ein- oder mehrlagige Papiermaterialien oder aber auch um ein mehrlagiges Material aus Papier und zusätzlichen Sperrschichten handeln. Diese Sperrschichten bestehen aus Wasserdampf bremsenden oder sperrenden Materialien, wie z. B. Metallen (Aluminium) oder Kunststoffen (Polyethylen). Hinsichtlich der Papiersackmaterialien sind drei übereinander liegende Schichten besonders geeignet, wobei die beiden außen liegenden Schichten aus speziellem Papier oder speziellen Papieren bestehen und die Innenlage wiederum aus einer Sperrschicht, bspw. aus Aluminium oder Polyethylen.

Neben dem Papierventilsack selbst wird von der vorliegenden Erfindung auch dessen Verwendung umfasst. Hier ist insbesondere eine Variante betroffen, bei der es sich um die Verpackung, den Transport und die Lagerung feinkörniger, pulverförmiger und/oder rieselfähiger Materialien und deren Mischungen handelt. Die Materialien weisen hierbei insbesondere Teilchengrößen zwischen 0,05 µm und 2 mm auf und liegen besonders bevorzugt im mikro- und nanoskaligen Bereich.

Die als Füllmaterial in den Papierventilsäcken verpackten, zu transportierenden oder zu lagernden Materialien weisen eine bevorzugte Teilchengrößenverteilung zwischen 0,1 µm und 1,0 mm, bevorzugt zwischen 1,0 µm und 500 µm und besonders bevorzugt zwischen 10 µm und 100 µm, auf.

Bei diesen Materialien handelt es sich insbesondere um anorganische, organische und/oder metallene Rein- und Mischstoffe und vorzugsweise um (Misch-)Oxide, Carbide, Sulfide, Hydroxide, Salze, Kohlenwasserstoffe sowie Monomere und Polymere natürlichen oder synthetischen Ursprungs und deren Mischungen.

Hinsichtlich der Füllmaterialien werden die erfindungsgemäßen Papierventilsäcke insbesondere für hydraulisch abbindende Materialien und insbesondere für Werktrockenmörtel verwendet.

Die erfindungsgemäßen Ausgestaltungsmerkmale sind aus der nachfolgenden Abbildung ersichtlich.

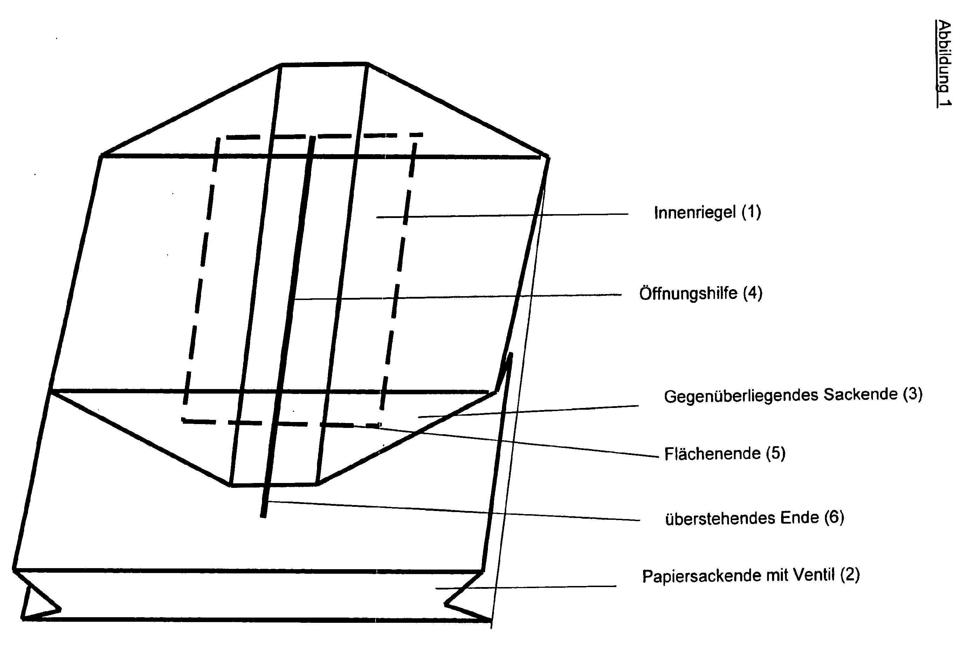

## Patentansprüche

1. Papierventilsack mit einem Papiersackende mit ventil, **dadurch gekennzeichnet, dass** ein sich an dem dem Papiersackende mit Ventil (2) gegenüber liegenden Papiersackende (3) befindender Innenriegel (1), an seiner dem Sackinneren zugewandten Fläche eine Öffnungshilfe (4) mit einem höheren Elastizitätsmodul und/oder einer höheren Zugfestigkeit als der Innenriegel (1) aufweist.

2. Papierventilsack nach Anspruch 1, **dadurch gekennzeichnet, dass** die Öffnungshilfe (4) an mindestens einem Flächenende (5) und höchstens zwei sich gegenüberliegenden Flächenenden des Innenriegels (1) über die Flächenerstreckung des Innenriegels (1) hinausreicht (6).

3. Papierventilsack nach einem der Ansprüche 1 oder 2, **dadurch gekennzeichnet, dass** die Öffnungshilfe (4) parallel zur Längserstreckung der Innenriegelfläche und vorzugsweise mittig an dieser angebracht ist.

4. Papierventilsack nach einem der Ansprüche 1 bis 3, **dadurch gekennzeichnet, dass** es sich bei der Öffnungshilfe (4) um ein Aufreißband oder einen Aufreißfaden handelt.

5. Papierventilsack nach einem der Ansprüche 1 bis 4, **dadurch gekennzeichnet, dass** die Öffnungshilfe (4) aus modifizierten Naturprodukten wie Wolle, Baumwolle oder Zellulose und/oder aus Kunststoffen wie Polymeren auf Basis der Monomere Ethylen, Styrol, Vinylacetat, Vinylchlorid, Propylen und Polyurethan besteht.

6. Papierventilsack nach einem der Ansprüche 1 bis 5, **dadurch gekennzeichnet, dass** die Öffnungshilfe (4) eine Breite oder einen Durchmesser von 0,1 mm bis 5 mm, bevorzugt 0,2 mm bis 3 mm, und besonders bevorzugt von 0,5 mm bis 2 mm aufweist.

7. Papierventilsack nach einem der Ansprüche 1 bis 6, **dadurch gekennzeichnet, dass** die Öffnungshilfe (4) am Innenriegel (1) verklebt und/oder verschweißt ist.

8. Papierventilsack nach einem der Ansprüche 1 bis 7, **dadurch gekennzeichnet, dass** das den Innenriegel aufweisende Papiersackende zur Umgebung hin ein Peeldeckblatt und/oder der Boden ein flächig verschweißtes oder verklebtes Deckblatt aufweist.

9. Verwendung des Papierventilsackes nach einem der Ansprüche 1 bis 8 für die Verpackung, den Transport und die Lagerung feinkörniger, pulverförmiger und/oder rieselfähiger Materialien und deren Mischungen, insbesondere mit Teilchengrößen zwischen 0,05 µm und 2 mm und vorzugsweise im mikro- und nanoskaligen Bereich.

10. Verwendung nach Anspruch 9. **dadurch gekennzeichnet, dass** die Materialien eine Teilchengrößenverteilung zwischen 0,1 1 µm und 1,0 mm, bevorzugt zwischen 1,0 µm und 500 µm und besonders bevorzugt zwischen 10 µm und 100 µm aufweisen.

11. Verwendung nach einem der Ansprüche 9 oder 10, **dadurch gekennzeichnet, dass** es sich bei den Materialien um anorganische, organische und/oder metallene Rein- und Mischstoffe handelt, vorzugsweise um (Misch-)Oxide, Carbide, Sulfide, Hydroxide, Salze, Kohlenwasserstoffe, Monomere und Polymere natürlichen oder synthetischen Ursprungs und deren Mischungen.

12. Verwendung nach einem der Ansprüche 9 bis 11, **dadurch gekennzeichnet, dass** es sich um hydraulisch abbindende Materialien und insbesondere um Werktrockenmörtel handelt.

## Claims

1. Paper valve sack with a paper-sack end with valve, **characterized in that** an inner panel (1) located at the paper-sack end (3) which is located opposite the paper-sack end with valve (2), on its surface which is directed toward the sack interior, has an opening aid (4) which has a higher modulus of elasticity and/or a higher tensile strength than the inner panel (1).

2. Paper valve sack according to Claim 1, **characterized in that**, at at least one surface-area end (5) and at most two opposite surface-area ends of the inner panel (1), the opening aid (4) extends beyond (6) the extent of the surface area of the inner panel (1).

3. Paper valve sack according to either of Claims 1 and 2, **characterized in that** the opening aid (4) is fitted parallel to the longitudinal extent of the innerpanel surface, and preferable in the centre of the latter.

4. Paper valve sack according to one of Claims 1 to 3, **characterized in that** the opening aid (4) is a tear-open strip or a tear-open thread.

5. Paper valve sack according to one of Claims 1 to 4, **characterized in that** the opening aid (4) consists of modified natural products such as wool, cotton or cellulose and/or of plastics such as polymers based on the following monomers, ethylene, styrene, vinyl acetate, vinyl chloride, propylene and polyurethane.

6. Paper valve sack according to one of Claims 1 to 5, **characterized in that** the opening aid (4) has a width or a diameter of 0.1 mm to 5 mm, preferably 0.2 mm to 3 mm and particularly preferably of 0.5 mm to 2 mm.

7. Paper valve sack according to one of Claims 1 to 6, **characterized in that** the opening aid (4) is adhesively bonded and/or welded to the inner panel (1).

8. Paper valve sack according to one of Claims 1 to 7, **characterized in that** the paper-sack end with the inner panel has, in the direction of the exterior surroundings, a peel-back cover sheet and/or the bottom has a cover sheet adhesively bonded or welded over the surface area.

9. Use of the paper valve sack according to one of Claims 1 to 8 for packaging, transporting and storing fine-grain, pulverulent and/or free-flowing materials and the mixtures thereof, in particular with particle sizes between 0.05 µm and 2 mm and preferably in the micro-scale and nano-scale ranges.

10. Use according to Claim 9, **characterized in that** the materials have a particle-size distribution between 0,1 µm and 1.0 mm, preferably between 1,0 µm und 500 µm and particularly preferably between 10 µm and 100 µm.

11. Use according to either of Claims 9 and 10, **characterized in that** the materials are inorganic, organic and/or metal pure and mixed substances, preferably (mixed) oxides, carbides, sulphides, hydroxides, salts, hydrocarbons, monomers and polymers of natural or synthetic origin and the mixtures thereof.

12. Use according to one of Claims 9 to 11, **characterized in that** the materials are hydraulically setting ones, in particular ready-made mortar.

## Revendications

1. Sac à valve en papier doté d'une extrémité de sac en papier avec une soupape, **caractérisé en ce qu'**une bande de fermeture (1) se trouvant en l'extrémité (3) du sac en papier opposée à l'extrémité du sac en papier avec la valve (2) présente un auxiliaire d'ouverture (4) sur sa surface orientée vers l'intérieur du sac, présentant un module élasticité supérieur et/ou une résistance à la traction supérieure à celui/celle de la bande de fermeture (1).

2. Sac à valve en papier selon la revendication 1, **caractérisé en ce que** l'auxiliaire d'ouverture (4) dépasse (6) l'étendue plane de la bande de fermeture (1) au moins en une extrémité plane (5) et au plus en deux extrémités planes opposées l'une à l'autre de la bande fermeture (1) de.

3. Sac à valve en papier selon l'une quelconque des revendications 1 ou 2, **caractérisé en ce que** l'auxiliaire d'ouverture (4) est disposé parallèlement à l'étendue longitudinale de la surface de la bande de fermeture et de préférence au centre de celle-ci.

4. Sac à valve en papier selon l'une quelconque des revendications 1 à 3, **caractérisé en ce qu'**il s'agit, pour l'auxiliaire d'ouverture (4) d'une bande ou d'un fil d'ouverture par déchirement.

5. Sac à valve en papier selon l'une quelconque des revendications 1 à 4, **caractérisé en ce que** l'auxiliaire d'ouverture (4) est constitué de produits naturels modifiés, tels que la laine, le coton ou la cellulose et/ou de matériaux synthétiques tels que des polymères à base des monomères éthylène, styrène, acétate de vinyle, chlorure de vinyle, propylène et polyuréthane.

6. Sac à valve en papier selon l'une quelconque des revendications 1 à 5, **caractérisé en ce que** l'auxiliaire d'ouverture (4) présente une largeur ou un diamètre de 0,1 mm à 5 mm, de préférence de 0,2 mm à 3 mm et de manière particulièrement préférée de 0,5 mm à 2 mm.

7. Sac à valve en papier selon l'une quelconque des revendications 1 à 6, **caractérisé en ce que** l'auxiliaire d'ouverture (4) est collé et/ou soudé sur la bande de fermeture (1).

8. Sac à valve en papier selon l'une quelconque des revendications 1 à 7, **caractérisé en ce que** l'extrémité du sac en papier présentant la bande de fermeture présente vers l'environnement une feuille de recouvrement pelable et/ou le fond présente une feuille de recouvrement, soudée ou collée sur toute sa surface.

9. Utilisation du sac à valve en papier selon l'une quelconque des revendications 1 à 8 pour l'emballage, le transport et l'entreposage de matériaux à grains fins, poudreux et/ou pouvant s'écouler et leurs mélanges, présentant en particulier des granulométries entre 0,05 µm et 2 mm et de préférence dans la plage de l'échelle du micromètre et du nanomètre.

10. Utilisation selon la revendication 9, **caractérisée en ce que** les matériaux présentent une répartition granulométrique entre 0,1 µm et 1,0 mm, de préférence entre 1,0 µm et 500 µm et de manière particulièrement préférée entre 10 µm et 100 µm.

11. Utilisation selon l'une quelconque des revendications 9 ou 10, **caractérisée en ce qu'**il s'agit, pour les matériaux, de substances inorganiques, organiques et/ou de substances pures et mixtes métalliques, de préférence d'oxydes (mixtes), de carbures, de sulfures, d'hydroxydes, de sels, d'hydrocarbures, de monomères et de polymères d'origine naturelle ou synthétique et leurs mélanges.

12. Utilisation selon l'une quelconque des revendications 9 à 11, **caractérisée en ce qu'**il s'agit de matériaux à prise hydraulique et en particulier de mortiers secs prêts à l'emploi.
